(19) Europäisches Patentamt
European Patent Office
Office européen des brevets

(11) **EP 2 722 726 B1**

(12) **EUROPEAN PATENT SPECIFICATION**

(45) Date of publication and mention
of the grant of the patent:
**20.01.2021 Bulletin 2021/03**

(51) Int Cl.:
***G05F 1/67*** (2006.01)

(21) Application number: **12188688.1**

(22) Date of filing: **16.10.2012**

(54) **Device for controlling the occurrence of a power curve measurement**

**Vorrichtung zur Kontrolle des Auftretens einer Leistungskurvenmessung**

**Dispositif pour commander l'apparition d'une mesure de courbe de puissance**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.04.2014 Bulletin 2014/17**

(73) Proprietors:
• **Mitsubishi Electric R&D Centre Europe B.V.**
**1119 NS  Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Voyer, Nicolas**
**35708 Rennes Cedex 7 (FR)**
• **Chapalain, Nadine**
**35708 Rennes Cedex 7 (FR)**

(74) Representative: **Cabinet Le Guen Maillet**
**3, impasse de la Vigie**
**CS 71840**
**35418 Saint-Malo Cedex (FR)**

(56) References cited:
EP-A1- 2 503 427    WO-A2-2011/100968
US-A- 5 869 956    US-A- 6 057 665

• **SYED MUHAMMAD RAZA KAZMI ET AL: "An improved and very efficient MPPT controller for PV systems subjected to rapidly varying atmospheric conditions and partial shading", POWER ENGINEERING CONFERENCE, 2009. AUPEC 2009. AUSTRALASIAN UNIVERSITIES, IEEE, PISCATAWAY, NJ, USA, 27 September 2009 (2009-09-27), pages 1-6, XP031582483, ISBN: 978-1-4244-5153-1**
• **BOITIER V ET AL: "Characterization of photovoltaic generators;Characterization of photovoltaic generators", EUROPEAN JOURNAL OF PHYSICS, INSTITUTE OF PHYSICS PUBLISHING, BRISTOL, GB, vol. 32, no. 3, 9 March 2011 (2011-03-09), pages 657-674, XP020189875, ISSN: 0143-0807, DOI: 10.1088/0143-0807/32/3/003**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates generally to a device for controlling the occurrence of a power curve measurement for determining a maximum power point of a photovoltaic power source like a photovoltaic cell or an array of cells.

A photovoltaic cell directly converts solar energy into electrical energy. The electrical energy produced by the photovoltaic cell can be extracted over time and used in the form of electric power. The direct electric power provided by the photovoltaic cell is provided to energy conversion devices like DC-DC up/down converter circuits and/or DC/AC inverter circuits.

However, the current-voltage characteristics of photovoltaic cells cause the output power to change nonlinearly with the current drawn from photovoltaic cells. The power-voltage curve changes according to climatic variations like light radiation levels and operation temperatures.

The near optimal point at which to operate photovoltaic cells or arrays of cells is at or near the region of the current-voltage curve where the power is greatest. This point is denominated as the Maximum Power Point (MPP).

The location of the Maximum Power Point is not known, but can be located, either through calculation models or by search algorithms.

Therefore Maximum Power Point Tracking techniques are needed to maintain the photovoltaic cells or arrays of cells operating point at its Maximum Power Point.

As the power-voltage curve changes according to climatic variations, the Maximum Power Point also changes according to climatic variations.

It is then necessary to be able to identify the Maximum Power Point at any time.

When a photovoltaic array experiences presence of partial shadow, the shape of current-voltage characteristics is modified and can exhibit more than one local maximum. Traditional Maximum Power Point tracking methods, such as Hill-climbing method can get trapped in a secondary local maximum, leading to unnecessary power losses.

Maximum Power tracking method can be improved by use of regular occurrence of power curve measurement. Once the curve is measured, it is processed so as to identify all local maximum, and highest maximum is identified as the maximum power point. However, power production during the realization of power curve is necessarily interrupted and/or reduced, leading to some power degradation.

If the occurring frequency is too high, production will be degraded significantly, even when no shadow is applied to the photovoltaic power source. If the occurring frequency is too low, then it is not possible to guess that the photovoltaic power source is being operated on a secondary local maximum, leading to degradation of production.

In addition, realization of power curve measurement over a large voltage range requires the discharge and charge of the input capacitor of the energy conversion device. Frequent cycling of the capacitor voltage has an impact on the capacitor lifetime.

The patent US 6057665 and the patent application WO 2011/100968 discloses a device for controlling the occurrence of a power curve measurement for determining a maximum power point of a photovoltaic power source

The paper of Kazmi Syed entitled "An improve and very efficient MPPT controller for PV systems subject to rapidly varying atmospheric conditions" published in Australian universities power engineering conference" page 1-6 September 200 discloses the detection of a presence of shadow.

The present invention aims at providing a device which enables to provide a tracking of the MPP which is robust to presence of shade, reduces the power degradation in absence of shade, and has limited impact on the lifetime of the input capacitor.

To that end, the present invention concerns a device according to claim 1.

The present invention concerns also a method for controlling the occurrence of a power curve measurement for determining a maximum power point of a photovoltaic power source, according to claim 9.

Thus, frequent scheduling of power curve measurement can be realised upon presence of shade. When the shade evolves and causes the maximum power point tracking algorithm to be trapped in secondary local maximum, the present invention can detect the right local maximum from the second power curve and adapt the voltage of the power source to the detected local maximum.

According to a particular feature, if the presence of shadow is detected, the second power curve obtaining process is scheduled earlier than the second power curve is scheduled if no presence of shadow is detected.

Thus, less frequent scheduling of power curve can be realised upon absence of shade. In absence of shade, the power curve measurement is realised less frequently, leading to lower number of charge and discharge cycles of the input capacitor of the energy conversion device as well as lower power degradation resulting from power interruption during the power curve measurement.

According to a particular feature, the device further comprises:

-    means for detecting a reduction of power provided by the photovoltaic power which is upper than a predetermined threshold,

- means for obtaining the second power curve when the reduction of power is upper than a predetermined threshold.

Thus, even when the absence of shade is detected, and while power curve measurement is performed less often, it is possible to check new presence of shade. If a reduction of power occurs, the present invention can trigger a power curve measurement earlier than scheduled, so as to check if reduction of power results from new presence of shade. As a result, if shade starts covering the solar array, which causes power reduction, the present invention can detect the presence of shade and reschedule power curve measurement earlier. The present invention does not miss the presence of multiple local maximum and selects primary local maximum as soon as shade appears on the photovoltaic power source.

According to a particular feature, the device further comprises:

- means for detecting a voltage variation during a maximum power tracking process which is upper than a predetermined threshold,
- means for obtaining the second power curve when the voltage variation is upper than a predetermined threshold.

Thus, even when the absence of shade is detected, and while power curve measurement is performed less often, it is possible to check new presence of shade also in the event that the shade does not bring significant reduction of power. If a voltage variation is detected, which results from the new presence of shade, the present invention can trigger a power curve measurement earlier than scheduled, so as to check if the detected voltage variation results from new presence of shade. As a result, if shade starts covering the solar array, which causes variation of maximum power point voltage, the present invention can detect the presence of shade and reschedule power curve measurement earlier. The present invention does not miss the presence of multiple local maximum and selects primary local maximum as soon as shade appears on the photovoltaic power source.

According to a particular feature, the means for obtaining power curve of the photovoltaic power source monitor the voltage of a capacitor at the output of the photovoltaic power source.

Thus, when the input capacitor is connected only to the solar array, time variation of the voltage of the input capacitor voltage indicates the current level of the solar array, and voltage-current characteristics of the photovoltaic power source can be determined from the time evolution of the voltage of the input capacitor.

According to a particular feature, the current provided by the photovoltaic power source is obtained by measuring the voltage of the capacitor during a charge of the capacitor.

Thus, when the input capacitor is connected only to the photovoltaic power source, time variation of the voltage of the input capacitor voltage indicates the current level of the photovoltaic power source, and voltage-current characteristics of the photovoltaic power source can be determined from the time evolution of the voltage of the input capacitor. The acquisition of the voltage-current characteristics of the photovoltaic power source is fast, leading to a reduced degradation of power production.

According to a particular feature, the device further comprises:

- means for determining the power provided by the photovoltaic power source,
- means for determining a minimum voltage and a minimum current to be used during the second power curve obtaining process from the determined power provided by the photovoltaic power source.

Thus, the voltage range for the power curve measurement can be reduced, resulting to extended lifetime of the input capacitor and to reduced charging time of the input capacitor. Power production degradation resulting from power curve measurement is reduced.

According to a particular feature, the device is a part of a power conditioner, which can operate up to a maximum current level and the minimum voltage to be used during the second power curve obtaining process equals the determined power provided by the photovoltaic power source divided by the maximum current level of the power conditioner.

Thus, the power curve measurement is not realised in voltage range which would yield a power lower than that being presently operated by the power conditioner.

According to a particular feature, the device is a part of a power conditioner, which can operate up to a minimum voltage level and the minimum current to be used during the second power curve obtaining process equals the determined power provided by the photovoltaic source divided by the maximum voltage level of the power conditioner.

Thus, power curve measurement is not realised in current range which would yield a power lower than that being presently operated by the power conditioner.

The characteristics of the invention will emerge more clearly from a reading of the following description of an example embodiment, the said description being produced with reference to the accompanying drawings, among which :

Fig. 1a is an example of a curve representing the output power variations of a photovoltaic power source according to the output voltage of the photovoltaic power source when there is no shadow on the surface of the photovoltaic power source;

Fig. 1b is an example of a curve representing the output power variations of a photovoltaic power source according to the output voltage of the photovoltaic power source when there is shadow on the surface of the photovoltaic power source;

Fig. 2a represents the surface of a photovoltaic power source on which there is no shadow;

Fig. 2b is an example of a curve representing the output power variations of a photovoltaic power source according to the output voltage of the photovoltaic power source when there is shadow on the surface of the photovoltaic power source;

Fig. 3a represents the surface of a photovoltaic power which is mainly covered by shadow;

Fig. 3b is an example of a curve representing the output power variations of a photovoltaic power source according to the output voltage of the photovoltaic power source, the surface of the photovoltaic power source being mainly covered by shadow;

Fig. 4a represents the surface of a photovoltaic power which is partially covered by shadow;

Fig. 4b is an example of a curve representing the output power variations of a photovoltaic power source according to the output voltage of the photovoltaic power source, the surface of the photovoltaic power source being partially covered by shadow;

Fig. 5 is an example of an energy conversion system wherein the present invention may be implemented;

Fig. 6 is an algorithm for controlling the occurrence of a power curve measurement used for determining a maximum power point of a photovoltaic power source according to the present invention;

Fig. 7 is an example of an algorithm for determining the power curve of the photovoltaic power source during charge and discharge of a capacitor connected to the terminals of the photovoltaic power source;

Fig. 8a is an example of shadow occurrence on the photovoltaic power source;

Fig. 8b is an example of maximum power point curve determination occurrence when the present invention is not implemented;

Fig. 8c is an example of maximum power point curve determination occurrence when the present invention is implemented.

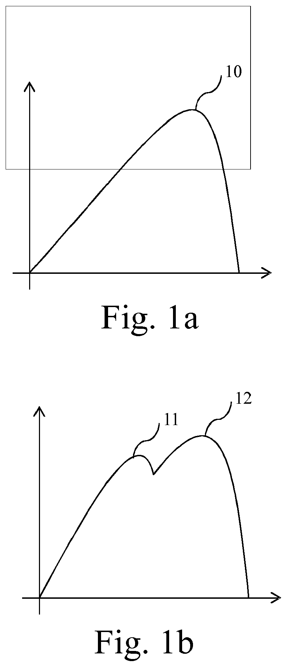

**Fig. 1a** is an example of a curve representing the output power variations of a photovoltaic power source according to the output voltage of the photovoltaic power source when there is no shadow on the surface of the photovoltaic power source.

On the horizontal axis of Fig. 1a, voltage values are shown. The voltage values are comprised between null value and the open circuit voltage $V_{OC}$.

On the vertical axis of Fig. 1a, power values are shown. The power values are comprised between null value and the maximum power point value. The maximum power point value is noted 10 in Fig. 1a.

The curve shown in Fig.1a exhibits only one maximum 10. Such behaviour is representative of a case wherein there is no shadow on the photovoltaic power source.

**Fig. 1b** is an example of a curve representing the output power variations of a photovoltaic power source according to the output voltage of the photovoltaic power source when there is shadow on the surface of the photovoltaic power source.

On the horizontal axis of Fig. 1b, voltage values are shown. The voltage values are comprised between null value and the open circuit voltage $V_{OC}$.

On the vertical axis of Fig. 1b, power values are shown.

The curve shown in Fig.1b exhibits two local maximums 11 and 12. Such behaviour is representative of a case wherein there is shadow on the photovoltaic power source.

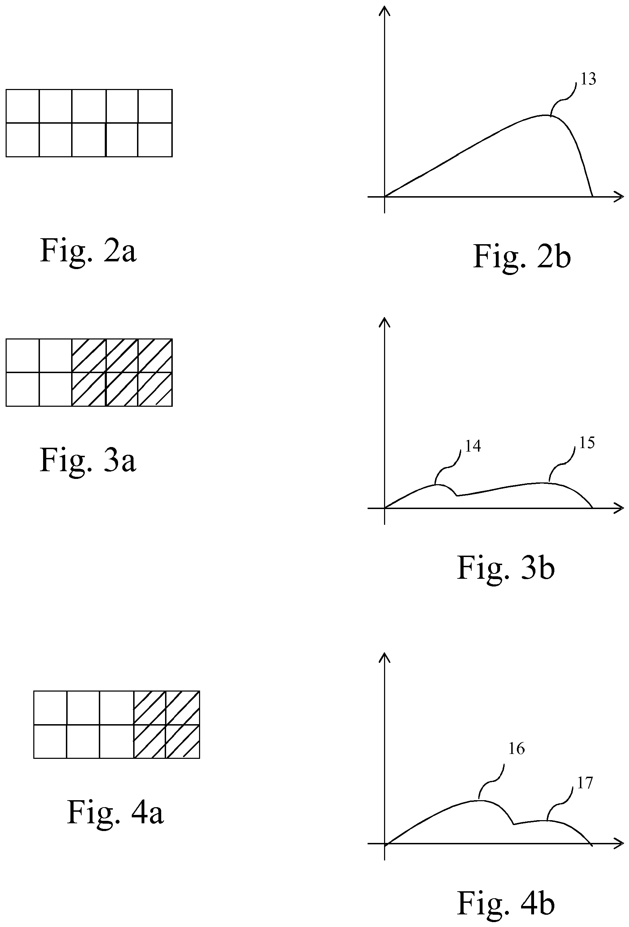

**Fig. 2a** represents the surface of a photovoltaic power source on which there is no shadow.

**Fig. 2b** is an example of a curve representing the output power variations of a photovoltaic power source according to the output voltage of the photovoltaic power source when there is shadow on the surface of the photovoltaic power source as shown in Fig. 2a.

The curve of Fig. 2b is similar as the curve of Fig. 1a, it will be no more described.

**Fig. 3a** represents the surface of a photovoltaic power source which is mainly covered by shadow.

In the example of Fig. 3a, 60% of the surface of the photovoltaic power source is covered by shadow.

**Fig. 3b** is an example of a curve representing the output power variations of a photovoltaic power source according to the output voltage of the photovoltaic power source, the surface of the photovoltaic power source being mainly covered by shadow.

The curve shown in Fig. 3b shows an important reduction of the power provided by the photovoltaic power source in comparison with the one provided by the photovoltaic source in Fig. 2b.

The curve shown in Fig. 3b exhibits two local maximums 14 and 15. Such behaviour is representative of a situation wherein there is shadow on the photovoltaic power source.

**Fig. 4a** represents the surface of a photovoltaic power source which is partially covered by shadow.

In the example of Fig. 4a, 40% of the surface of the photovoltaic power source is covered by shadow.

The variation between Fig. 3a and Fig. 3b is for example due to displacement of shadows on the surface of the photovoltaic power source PV resulting from displacement of the sun in the sky.

**Fig. 4b** is an example of a curve representing the output power variations of a photovoltaic power source according to the output voltage of the photovoltaic power source, the surface of the photovoltaic power source being partially covered by shadow.

The curve shown in Fig. 4b shows an important reduction of the power provided by the photovoltaic power source PV in comparison with the one provided by the photovoltaic power source PV in Fig. 2b and an increase of the power provided by the photovoltaic power source PV in comparison with the one provided by the photovoltaic power source in Fig. 3b.

The curve shown in Fig. 4b exhibits two local maximums 16 and 17. Such behaviour is representative of a case wherein there is shadow on the photovoltaic power source PV.

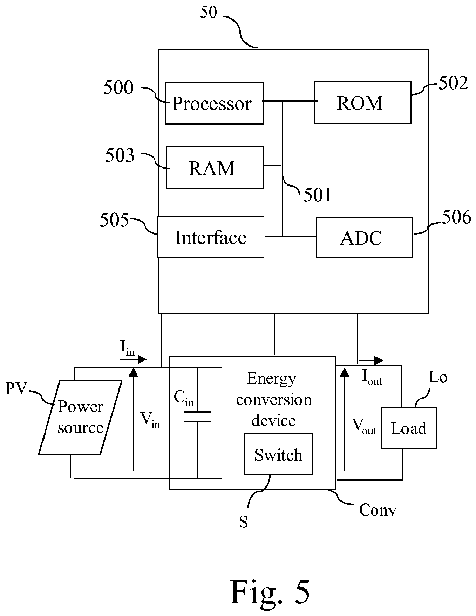

**Fig. 5** is an example of an energy conversion system wherein the present invention may be implemented.

The energy conversion system is composed of a photovoltaic power source PV like a photovoltaic cell or an array of cells or a fuel cell connected to an energy conversion device Conv like a DC-DC step-down/step-up converter and/or a DC/AC converter also named inverter, which output provides electrical energy to the load Lo.

The energy conversion device Conv comprises at least one switch S and at least one capacitor $C_{in}$ which is connected between the input terminals of the energy conversion device Conv.

The photovoltaic power source PV is connected to the input terminals of the energy conversion device Conv.

The photovoltaic power source PV provides current intended to the load Lo. The current $I_{in}$ and the voltage $V_{in}$ provided by the photovoltaic power source PV are converted by the energy conversion device Conv in output current $I_{out}$ and output voltage $V_{out}$ prior to be used by the load Lo.

According to the invention, the energy conversion system further comprises a controller device 50.

The controller device 50 determines, from successive power measurements, a regulation voltage value. The regulation voltage value is an estimation of the input voltage value which maximizes the energy produced by the photovoltaic power source PV.

It has to be noted here that successive power measurements used by the controller device 50 can be realised at the input or at the output of the energy conversion device Conv.

The controller device 50 controls the input voltage of the energy conversion device Conv, by controlling a duty cycle according to the regulation voltage value $V_{pvref}$.

The duty cycle drives the ON/OFF state of the at least one switch S of the energy conversion device Conv.

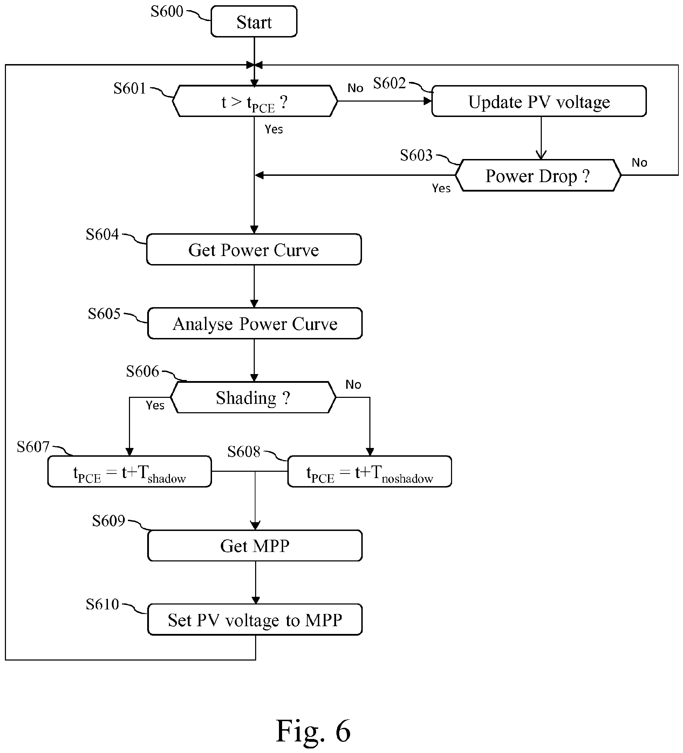

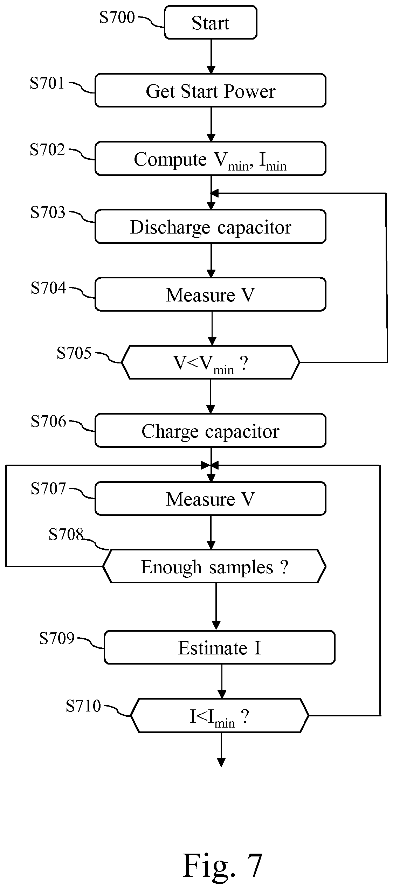

The controller device 50 has, for example, an architecture based on components connected together by a bus 501 and a processor 500 controlled by the program related to the algorithm as disclosed in the Figs. 6 and 7.

It has to be noted here that the processor 500 is, in a variant, implemented under the form of one or several dedicated integrated circuits which execute the same operations as the one executed by the processor 500 as disclosed hereinafter.

The bus 501 links the processor 500 to a read only memory ROM 502, a random access memory RAM 503, an analogue to digital converter ADC 506 and to an interface 505.

The read only memory ROM 502 contains instructions of the programs related to the algorithms as disclosed in the Figs. 6 and 7 which are transferred, when the controller device 50 is powered on to the random access memory RAM 503.

The RAM memory 503 contains registers intended to receive variables, and the instructions of the programs related to the algorithms as disclosed in the Figs. 6 and 7.

The analogue to digital converter 506 is connected to the input and the output of the energy conversion device Conv and converts voltages and currents at the input and the output of the energy conversion device Conv into binary information.

The processor 500 transfers, through interface module 505, the duty cycle D to be applied by the energy conversion device Conv.

According to the invention, the controller device 50 comprises:

- means for obtaining a first power curve of the photovoltaic source,
- means for detecting the presence of shadow from the first power curve,
- means for scheduling a second power curve obtaining process according to the result of shadow detection.

**Fig. 6** is an algorithm for controlling the occurrence of a power curve measurement used for determining a maximum power point of a photovoltaic power source according to the present invention.

More precisely, the present algorithm is executed by the processor 500 of the controller device 50.

At step S600, the present algorithm starts, a variable $t_{PCE}$ is initialized to null value.

At next step S601, the processor 500 checks if it is time to obtain a curve representing the output current variations of a photovoltaic power source PV according to the output voltage of the photovoltaic power source PV.

For that, the processor 500 checks if current time is higher than a predetermined time $t_{PCE}$.

If current time is higher than $t_{PCE}$, the processor 500 moves to step S604. Otherwise, the processor 500 moves to step S602.

At step S602, the processor 500 commands the interface 505 in order to modify the duty cycle of the switch S in order in order to increase or decrease the voltage $V_{in}$ provided by the photovoltaic power source PV by an increment or decrement of, for example, one volt. Such process is used for tracking low variations of the maximum power point.

At next step S603, the processor 500 commands the ADC 506 in order to obtain the current value $I_{in}$ provided by the photovoltaic power source PV and determines the power provided by the photovoltaic power source PV.

At the same step, the processor 5000 checks if a power drop of the power provided by the photovoltaic power source PV occurs.

For that, the processor 500 checks if the determined power is lower than the power provided by the photovoltaic power source PV at a previous iteration of the loop constituted by the steps S601 to S603.

For example, the processor 500 checks if the determined power is at least between 2 to 7% lower than the power provided by the photovoltaic power source PV at a previous iteration or is at least 3% lower than the power provided by the photovoltaic power source PV at a previous iteration.

If a power drop occurs, the processor 500 moves to step S604. Otherwise, the processor 500 returns to step S601.

As far as there is no power drop or current time is lower than $T_{PCE}$, the processor 500 executes the steps S601 to S603, increments the voltage provided by the photovoltaic power source PV if the determined power is upper than the power provided by the photovoltaic power source PV at a previous iteration of the loop constituted by the steps S601 to S603 or decrements the voltage provided by the photovoltaic power source PV if the determined power is upper than the power provided by the photovoltaic power source PV at a previous iteration of the loop constituted by the steps S601 to S603.

At step S604, the processor 500 commands the interface 505 and the ADC 506 in order to obtain a power curve measurement for determining the maximum power point of the photovoltaic power source PV.

According to a first mode of realization of the present invention, the processor 500 commands successively the interface 505 in order to modify the duty cycle of the switch S in order to apply successive voltages for $V_{in}$ from the minimum to the maximum operational voltage of the converter Conv and to obtain from ADC 506 the current value $I_{in}$ provided by the photovoltaic power source PV at each applied voltage.

According to a second mode of realization of the present invention, the processor 500 commands successively the interface 505 in order to modify the duty cycle of the switch S in order to apply successive voltages for $V_{in}$ from a minimum voltage $V_{min}$ determined from the last applied voltage $V_{S602}$ at step S602 and the last current $I_{S603}$ measured at step S603 up to a minimum current $I_{min}$ determined from the last applied voltage $V_{S602}$ at step S602 and the last current $I_{S603}$ measured at step S603.

The minimum voltage $V_{min}$ is determined according to the following formula:

$$V_{min}=I_{S603}*V_{S602}/I_{Convmax}$$

where $I_{Convmax}$ is the maximum current that can be input to the energy conversion device Conv.

The minimum current $I_{min}$ is determined according to the following formula:

$$I_{min}=I_{S603}*V_{S602}/V_{Convmax}$$

where $V_{Convmax}$ is the maximum voltage that can be input to the energy conversion device Conv.

According to a third mode of realization, which will be disclosed in reference to Fig. 7, the processor 500 commands the interface 506 and the ADC 506 in order to obtain a power curve measurement. For that, the interface 506 commands a voltage ramp to the minimum voltage $V_{min}$ and ADC 506 takes samples of the voltage $V_{in}$ during the discharge of the capacitor $C_{in}$. When samples of voltage $V_{in}$ indicate that minimum voltage $V_{min}$ is reached, the interface 506 commands a charge of input capacitor $C_{in}$ by the photovoltaic power source PV. ADC 506 takes samples of the voltage $V_{in}$ during the charge of the capacitor $C_{in}$ and processor 500 derives, from the samples of voltage, the current $I_{in}$. When samples of current $I_{in}$ indicate that minimum voltage $I_{min}$ is reached, the interface 506 stops the charging of the capacitor $C_{in}$.

At next step S604, the processor 500, using voltage and current couples obtained at step S604 performs an analysis.

The processor 500 may analyse the voltage and current couples in order to determine if one or more local maximums exist in the power curve.

The processor 500 may determine a fill factor of the power curve obtained from the voltage and current couples.

For that, processor 500 may determine a maximum power point current $I_{MP}$ value and voltage value $V_{MP}$ and et calculate the following formula:

$$(I_{MP}/I_{SC})*(V_{MP}*V_{OC})$$

where $I_{SC}$ is the short circuit current of the photovoltaic power source and $V_{OC}$ is the open voltage of the photovoltaic power source PV.

The processor 500 may check if there is a discontinuous concavity of the power curve.

At next step S606, the processor 500 determines if there is at least one shadow on the surface of the photovoltaic power source PV.

The processor 500 determines that there is at least one shadow on the surface of the photovoltaic power source PV if more than one local maximum exist in the power curve.

The processor 500 may determine that there is at least one shadow on the surface of the photovoltaic power source PV if the fill factor is lower than a predetermined value, for example, 0.7.

The processor 500 may determine that there is at least one shadow on the surface of the photovoltaic power source PV if there is a discontinuous concavity of the power curve.

If there is at least one shadow on the surface of the photovoltaic power source PV, the processor 500 moves to step S607. Otherwise, the processor 500 moves to step S608.

At step S607, the processor 500 increments the variable $t_{PCE}$ by a first predetermined value $T_{shadow}$.

After that, the processor 500 moves to step S609.

At step S608, the processor 500 increments the variable $t_{PCE}$ by a second predetermined value $T_{noshadow}$. The first predetermined value $T_{shadow}$ is lower that the second predetermined value $T_{noshadow}$. For example $T_{shadow}$ is equal to one minute and $T_{noshadow}$ is equal to one hour.

After that, the processor 500 moves to step S609.

At step S609, the processor 500 determines from the voltage and current samples obtained at step S604, the maximum power point current $I_{MP}$ value and voltage value $V_{MP}$.

At next step S610, the processor 500 commands the interface 506 in order to apply the duty cycle on the switch S which corresponds to the maximum power point voltage value $V_{MP}$.

After that, the processor 500 returns to step S601.

Fig. 7 is an example of an algorithm for determining the power curve of the photovoltaic power source during charge and discharge of a capacitor connected to the terminals of the photovoltaic power source.

The present algorithm is executed, according to the third mode of realization instead set S604 of the algorithm of Fig. 6.

At step S700, algorithm starts.

At next step S701, the processor 500 obtains the last current $I_{S603}$ measured at step S603 and the last applied voltage $V_{S602}$ at step S602.

At next step S702, the processor 500 determines the minimum voltage $V_{min}$ and the minimum current $I_{min}$ according to the following formulas:

$$V_{min}=I_{S603}*V_{S602}/I_{Convmax}$$

$$I_{min}=I_{S603}*V_{S602}/V_{Convmax}.$$

At next step S703, the processor 500 commands, through the interface 505 and the switch S, the discharge of the capacitor $C_{in}$.

The discharge of the capacitor $C_{in}$ is performed by continuously modifying the duty cycle of the switch S in order to obtain a discharge curve like an affine function of time.

At next step S704, the processor 500 commands the ADC 506 in order to take sample of the voltage $V_{in}$ during the discharge of the capacitor $C_{in}$.

At next step S705, the processor 500 checks if the voltage $V_{in}$ is lower than the minimum voltage $V_{min}$.

If the voltage $V_{in}$ is lower than the minimum voltage $V_{min}$, the processor 500 moves to step S706. Otherwise the processor 500 returns to step S703.

At step S706, the processor 500 commands, through the interface 505 and the switch S, the charge of the capacitor $C_{in}$. Upon command of switch S, capacitor $C_{in}$ is connected only to the photovoltaic power source PV and is charged by the current of photovoltaic power source PV.

As current of photovoltaic power source PV charges the capacitor $C_{in}$, the voltage of the capacitor $C_{in}$ continuously increases with time until the status of switch S is changed so as to connect capacitor $C_{in}$ not only to the photovoltaic power source PV. As example, status of switch S is changed as disclosed at step S610.

At next step S707, the processor 500 commands the ADC 506 in order to take sample of the voltage $V_{in}$ during the charge of the capacitor $C_{in}$.

At next step S708, the processor 500 checks if enough samples of $V_{in}$ are taken for estimating the current $I_{in}$ going through the capacitor $C_{in}$.

For example N equal four samples are necessary for performing a reliable estimation of the current $I_{in}$ going through the capacitor $C_{in}$.

A higher number N of samples may be used depending on the level of noise experienced by the samples of $V_{in}$.

If enough samples of $V_{in}$ are taken, the processor 500 moves to step S709. Otherwise, the processor 500 returns to step S707.

At next step S709, the processor 500 estimates the current going through the capacitor $C_{in}$.

The capacitor current $I_{in}$ is determined by multiplying the capacitance value of the capacitor $C_{in}$ by the time derivative of the N last measured voltage samples, in order to obtain a voltage derivative. The voltage derivative being obtained through a fitted mathematical function, for example a polynomial function with real coefficients.

The fitted mathematical function is obtained by minimizing the sum of the squares of the difference between the measured voltage samples $y_i$ with i=1 to N at consecutive time samples $x_i$ and mathematical functions $f(x_i)$ in order to obtain a processed voltage for the given time sample. It is done as follows.

Given N samples $(x_1,y_1),(x_2,y_2)...(x_N,y_N)$, the required fitted mathematical function can be written, for example, in the form:

$$f(x)=C_1 \cdot f_1(x)+C_2 \cdot f_2(x)+...+C_K \cdot f_K(x)$$

where $f_j(x)$, j=1,2...K are mathematical functions of x and the $C_j$, j=1,2...K are constants which are initially unknown.

The sum of the squares of the difference between f(x) and the actual values of y is given by

$$E = \sum_{i=1}^{N} \left[ f(x_i) - y_i \right]^2 = \sum_{i=1}^{N} \left[ C_1 f_1(x_i) + C_2 f_2(x_i) + ... + C_K f_K(x_i) - y_i \right]^2$$

This error term is minimized by taking the partial first derivative of E with respect to each of constants, $C_j$, j=1,2,...K and putting the result to zero. Thus, a symmetric system of K linear equation is obtained and solved for $C_i$, $C_2$, ... , $C_K$. This procedure is also known as Least Mean Squares (LMS) algorithm.

With the voltage samples of $V_{in}$, a curve is obtained based on the fitting of suitable mathematical functions, for example polynomial functions with real coefficients, in pre-defined windows which will move for each sample. Thus, the voltage is filtered and its derivative can be simultaneously calculated for every central point in the window in a very simple and direct way, resulting in the determination of current $I_{in}$ without the need of any additional current sensor.

At next step S710, the processor 500 checks if the current value estimated at step S709 is lower than the minimum current $I_{min}$ determined at step S702.

If the current value estimated at step S709 is lower than the minimum current $I_{min}$, the processor 500 moves to step S605 of Fig. 6. Otherwise, the processor 500 returns to step S707.

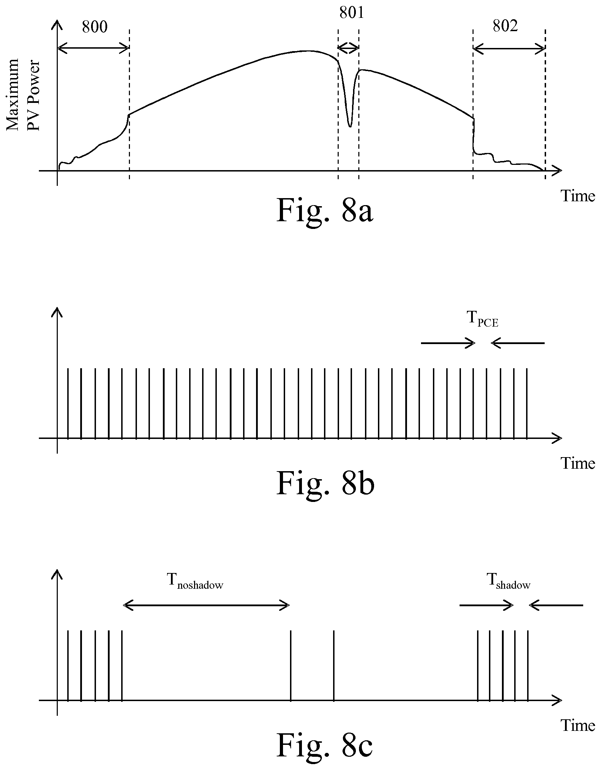

**Fig. 8a** is an example of shadow occurrence on the photovoltaic power source.

On the horizontal axis, the time is represented and on the vertical axis, the maximum power provided by the photovoltaic power source PV is shown.

In Fig. 8a, during two time periods noted 800 and 802, shadows are on the surface of the photovoltaic power source PV. During time period 801, cloud passes through the photovoltaic power source PV.

As shown in Fig. 8a, during these time periods, the electric power provided by the photovoltaic power source PV varies a lot and is low.

**Fig. 8b** is an example of maximum power point curve determination occurrence when the present invention is not implemented.

On the horizontal axis, the time is represented and on the vertical axis, the occurrence of the determination of the power curve is represented., the same timing $T_{shadow}$ and $T_{noshadow}$ is used.

As it can be seen in Fig. 8b, the occurrence of the determination of the power curve is high. In such case, the overall energy provided by the photovoltaic power source PV is reduced as it does not provide any power to the load Lo during determinations of the power curve.

**Fig. 8c** is an example of maximum power point curve determination occurrence when the present invention is implemented.

On the horizontal axis, the time is represented and on the vertical axis, the occurrence of the determination of the power curve as the one disclosed at step S604 is represented. At step S604, different timings $T_{shadow}$ and $T_{noshadow}$ are used.

Once period 800 is over, processor 500 detects the absence of shadow and starts scheduling power curves estimation with large timing $T_{noshadow}$.

At period 801, the power drop due to the presence of cloud is detected and a power curve is immediately realised. The processor 500 analyses the measured power curve and determines the absence of multiple local maximum. Processor 500 restarts scheduling power curves estimation with large timing $T_{noshadow}$.

At period 802, the power drop due to hitting of evening shade on photovoltaic power source PV is detected and a power curve is immediately realised. The processor 500 analyses the measured power curve and determines presence of multiple local maximum resulting from the hitting of evening shade on the photovoltaic power source PV. Processor 500 restarts scheduling power curves estimation with small timing $T_{shadow}$. As it can be seen in Fig. 8c, the occurrence of the determination of the power curve is, according to the invention, reduced a lot or reduced to null value as far as no shadow is on the surface of the photovoltaic power source PV. As soon as shadow is detected on the surface of the photovoltaic power source PV, the present invention increases the occurrence of the determination of the power curve.

Naturally, many modifications can be made to the embodiments of the invention described above without departing from the scope of the present invention.

## Claims

1. Device for controlling the occurrence of a power curve measurement for determining a maximum power point of a photovoltaic power source, the device being configured to be part of a power conditioner, which can operate up to a maximum current level and the device comprising:

     - means (500) for obtaining a first power curve of the photovoltaic source,
     - means (500) for detecting the presence of shadow from the first power curve,
     - means (500) for determining the power provided by the photovoltaic power source,
     - means (500) for scheduling a second power curve obtaining process according to the result of shadow detection
     **characterised in that** the device further comprises:
     - means (500) for determining a minimum voltage and a minimum current to be used during the second power curve obtaining process from the determined power provided by the photovoltaic power source, the minimum voltage to be used during the second power curve obtaining process equals the determined power provided by the photovoltaic power source divided by the maximum current level of the power conditioner.

2. Device according to claim 1, **characterized in that** if the presence of shadow is detected, the second power curve obtaining process is scheduled earlier than the second power curve is scheduled if no presence of shadow is detected.

3. Device according to claim 2, **characterized in that** the device further comprises:

     - means for detecting a reduction of power provided by the photovoltaic power which is upper than a predetermined threshold,
     - means for obtaining the second power curve when the reduction of power is upper than a predetermined threshold.

4. Device according to claim 2, **characterized in that** the device further comprises:

     - means for detecting a voltage variation during a maximum power tracking process which is upper than a predetermined threshold,

- means for obtaining the second power curve when the voltage variation is upper than a predetermined threshold.

5. Device according to claim 1 or 2, **characterised in that** the means for obtaining power curve of the photovoltaic power source monitor the voltage of a capacitor at the output of the photovoltaic power source.

6. Device according to claim 5, **characterized in that** the current provided by the photovoltaic power source is obtained by measuring the voltage of the capacitor during a charge of the capacitor.

7. Device according to claim 5 or 6, **characterized in that** the voltage provided by the photovoltaic power source is obtained by measuring the voltage of the capacitor during a discharge of the capacitor.

8. Device according to claim 1, wherein the power conditioner can operate up to a minimum voltage level, **characterized in that** the minimum current to be used during the second power curve obtaining process equals the determined power provided by the photovoltaic power source divided by the maximum voltage level of the power conditioner.

9. Method for controlling the occurrence of a power curve measurement for determining a maximum power point of a photovoltaic power source, **characterised in that** the method comprises the steps of:

- obtaining a first power curve of the photovoltaic source,
- detecting the presence of shadow from the first power curve,
- determining the power provided by the photovoltaic power source,
- scheduling a second power curve obtaining process according to the result of shadow detection, the method **characterised in that** it further comprises the step of:
- determining a minimum voltage and a minimum current to be used during the second power curve obtaining process from the determined power provided by the photovoltaic power source, the minimum voltage to be used during the second power curve obtaining process equals the determined power provided by the photovoltaic power source divided by the maximum current level of the power conditioner.

**Patentansprüche**

1. Vorrichtung zum Steuern des Vorgangs einer Leistungskurvenmessung zum Bestimmen eines maximalen Leistungspunkts einer photovoltaischen Leistungsquelle, wobei die Vorrichtung derart konfiguriert ist, dass sie Teil eines Leistungskonditionierers ist, der bis zu einem maximalen Strompegel arbeiten kann, und wobei die Vorrichtung folgendes umfasst:

- Mittel (500) zum Erhalten einer ersten Leistungskurve der photovoltaischen Quelle,
- Mittel (500) zum Erfassen des Vorhandenseins eines Schattens aus der ersten Leistungskurve,
- Mittel (500) zum Bestimmen der durch die photovoltaische Leistungsquelle zur Verfügung gestellten Leistung,
- Mittel (500) zum Planen eines Prozesses zum Erhalten einer zweiten Leistungskurve gemäß dem Ergebnis einer Schattenerfassung, **dadurch gekennzeichnet, dass** die Vorrichtung weiterhin folgendes umfasst:
- Mittel (500) zum Bestimmen einer minimalen Spannung und eines minimalen Stroms, um während des Prozesses zum Erhalten einer zweiten Leistungskurve verwendet zu werden, aus der bestimmten Leistung, die durch die photovoltaische Leistungsquelle zur Verfügung gestellt ist, wobei die während des Prozesses zum Erhalten einer zweiten Leistungskurve zu verwendende minimale Spannung der bestimmten Leistung, die durch die photovoltaische Leistungsquelle zur Verfügung gestellt ist, geteilt durch den maximalen Strompegel des Leistungskonditionierers gleicht.

2. Vorrichtung nach Anspruch 1, **dadurch gekennzeichnet, dass**, wenn das Vorhandensein von Schatten erfasst wird, der Prozess zum Erhalten einer zweiten Leistungskurve für früher geplant wird als die zweite Leistungskurve geplant wird, wenn kein Vorhandensein von Schatten erfasst wird.

3. Vorrichtung nach Anspruch 2, **dadurch gekennzeichnet, dass** die Vorrichtung weiterhin folgendes umfasst:

- Mittel zum Erfassen einer Reduzierung von Leistung, die durch die photovoltaische Leistung zur Verfügung gestellt ist, die höher als eine vorbestimmte Schwelle ist,
- Mittel zum Erhalten der zweiten Leistungskurve, wenn die Reduzierung von Leistung höher als eine vorbestimmte Schwelle ist.

**4.** Vorrichtung nach Anspruch 2, **dadurch gekennzeichnet, dass** die Vorrichtung weiterhin folgendes umfasst:

- Mittel zum Erfassen einer Spannungsänderung während eines Prozesses zum Verfolgen einer maximalen Leistung, die höher als eine vorbestimmte Schwelle ist,
- Mittel zum Erhalten der zweiten Leistungskurve, wenn die Spannungsänderung höher als eine vorbestimmte Schwelle ist.

**5.** Vorrichtung nach Anspruch 1 oder 2, **dadurch gekennzeichnet, dass** die Mittel zum Erhalten einer Leistungskurve der photovoltaischen Leistungsquelle die Spannung eines Kondensators am Ausgang der photovoltaischen Leistungsquelle überwachen.

**6.** Vorrichtung nach Anspruch 5, **dadurch gekennzeichnet, dass** der durch die photovoltaische Leistungsquelle zur Verfügung gestellte Strom durch Messen der Spannung des Kondensators während eines Ladens des Kondensators erhalten wird.

**7.** Vorrichtung nach Anspruch 5 oder 6, **dadurch gekennzeichnet, dass** die durch die photovoltaische Leistungsquelle zur Verfügung gestellte Spannung durch Messen der Spannung des Kondensators während eines Entladens des Kondensators erhalten wird.

**8.** Vorrichtung nach Anspruch 1, wobei der Leistungskonditionierer bis zu einem minimalen Spannungspegel arbeiten kann, **dadurch gekennzeichnet,** der während des Prozesses zum Erhalten einer zweiten Leistungskurve zu verwendende minimale Strom der durch die photovoltaische Leistungsquelle zur Verfügung gestellten bestimmten Leistung geteilt durch den maximalen Spannungspegel des Leistungskonditionierers gleicht.

**9.** Verfahren zum Steuern des Vorgangs einer Leistungskurvenmessung zum Bestimmen eines maximalen Leistungspunkts einer photovoltaischen Leistungsquelle, **dadurch gekennzeichnet, dass** das Verfahren die folgenden Schritte umfasst:

- Erhalten einer ersten Leistungskurve der photovoltaischen Quelle,
- Erfassen des Vorhandenseins eines Schattens aus der ersten Leistungskurve,
- Bestimmen der durch die photovoltaische Leistungsquelle zur Verfügung gestellten Leistung,
- Planen eines Prozesses zum Erhalten einer zweiten Leistungskurve gemäß dem Ergebnis einer Schattenerfassung, wobei das Verfahren **dadurch gekennzeichnet ist, dass** es weiterhin die folgenden Schritte umfasst:
- Bestimmen einer minimalen Spannung und eines minimalen Stroms, um während des Prozesses zum Erhalten einer zweiten Leistungskurve verwendet zu werden, aus der bestimmten Leistung, die durch die photovoltaische Leistungsquelle zur Verfügung gestellt ist, wobei die während des Prozesses zum Erhalten einer zweiten Leistungskurve zu verwendende minimale Spannung der bestimmten Leistung, die durch die photovoltaische Leistungsquelle zur Verfügung gestellt ist, geteilt durch den maximalen Strompegel des Leistungskonditionierers gleicht.

**Revendications**

**1.** Dispositif de contrôle de la programmation d'une mesure de courbe de puissance pour déterminer un point de puissance maximum d'une source d'énergie photovoltaïque, le dispositif étant configuré pour faire partie d'un conditionneur de puissance, qui peut fonctionner jusqu'à un niveau de courant maximum et le dispositif comporte :

- des moyens (500) d'obtention d'une première courbe de puissance de la source photovoltaïque,
- des moyens (500) de détection de la présence d'ombre à partir de la première courbe de puissance,
- des moyens (500) de détermination de la puissance fournie par la source d'énergie photovoltaïque,
- des moyens (500) de programmation d'un deuxième processus d'obtention de courbe de puissance en fonction du résultat de la détection d'ombre, **caractérisé en ce que** le dispositif comporte en outre:
- des moyens (500) de détermination d'une tension minimale et d'un courant minimum à utiliser pendant le processus d'obtention de la deuxième courbe de puissance à partir de la puissance déterminée fournie par la source d'énergie photovoltaïque, la tension minimale à utiliser pendant le processus d'obtention de la deuxième courbe de puissance est égale à la puissance déterminée fournie par la source d'énergie photovoltaïque divisée par le niveau de courant maximal du conditionneur de puissance.

**2.** Dispositif selon la revendication 1, **caractérisé en ce que** si la présence d'ombre est détectée, le processus d'obtention de la deuxième courbe de puissance est programmé plus tôt que la programmation de la deuxième courbe de puissance si aucune présence d'ombre n'est détectée.

**3.** Dispositif selon la revendication 2, **caractérisé en ce que** le dispositif comporte en outre :

- des moyens de détection d'une réduction de puissance fournie par la puissance photovoltaïque qui est supérieure à un seuil prédéterminé,
- des moyens d'obtention de la deuxième courbe de puissance lorsque la réduction de puissance est supérieure à un seuil prédéterminé.

**4.** Dispositif selon la revendication 2, **caractérisé en ce que** le dispositif comporte en outre:

- des moyens de détection d'une variation de tension lors d'un processus de poursuite de puissance maximale qui est supérieure à un seuil prédéterminé,
- des moyens d'obtention de la deuxième courbe de puissance lorsque la variation de tension est supérieure à un seuil prédéterminé.

**5.** Dispositif selon la revendication 1 ou 2, **caractérisé en ce que** les moyens d'obtention de la courbe de puissance de la source d'énergie photovoltaïque surveillent la tension d'un condensateur en sortie de la source d'énergie photovoltaïque.

**6.** Dispositif selon la revendication 5, **caractérisé en ce que** le courant fourni par la source d'énergie photovoltaïque est obtenu en mesurant la tension du condensateur lors d'une charge du condensateur.

**7.** Dispositif selon la revendication 5 ou 6, **caractérisé en ce que** la tension fournie par la source d'énergie photovoltaïque est obtenue en mesurant la tension du condensateur lors d'une décharge du condensateur.

**8.** Dispositif selon la revendication 1, dans lequel le conditionneur de puissance peut fonctionner jusqu'à un niveau de tension minimum, **caractérisé en ce que** le courant minimum à utiliser lors du processus d'obtention de la deuxième courbe de puissance est égal à la puissance déterminée fournie par la source d'énergie photovoltaïque divisée par le niveau de tension maximum du conditionneur de puissance.

**9.** Procédé de contrôle de la programmation d'une mesure de courbe de puissance pour déterminer un point de puissance maximum d'une source d'énergie photovoltaïque, **caractérisé en ce que** le procédé comporte les étapes de:

- obtention d'une première courbe de puissance de la source photovoltaïque,
- détection de la présence d'ombre à partir de la première courbe de puissance,
- détermination de la puissance fournie par la source d'énergie photovoltaïque,
- programmation d'un deuxième processus d'obtention de courbe de puissance en fonction du résultat de la détection d'ombre, le procédé étant **caractérisé en ce qu'**il comporte en outre l'étape de:
- détermination d'une tension minimale et d'un courant minimal à utiliser pendant le processus d'obtention de la deuxième courbe de puissance à partir de la puissance déterminée fournie par la source d'énergie photovoltaïque, la tension minimale à utiliser pendant le processus d'obtention de la deuxième courbe de puissance est égale à la puissance déterminée fournie par le source d'énergie photovoltaïque divisée par le niveau de courant maximal du conditionneur de puissance.

Fig. 1a

Fig. 1b

Fig. 2a

Fig. 2b

Fig. 3a

Fig. 3b

Fig. 4a

Fig. 4b

50

500 Processor

502 ROM

503 RAM

501

505 Interface

506 ADC

PV Power source

$I_{in}$

$V_{in}$

$C_{in}$

Energy conversion device

Switch

$I_{out}$

$V_{out}$

Lo

Load

S

Conv

Fig. 5

S600 — Start

S601 — $t > t_{PCE}$ ? —— No —— S602 — Update PV voltage

Yes

S603 — Power Drop ? —— No

Yes

S604 — Get Power Curve

S605 — Analyse Power Curve

S606 — Shading ?

Yes          No

S607 — $t_{PCE} = t+T_{shadow}$          S608 — $t_{PCE} = t+T_{noshadow}$

S609 — Get MPP

S610 — Set PV voltage to MPP

Fig. 6

S700 — Start

S701 — Get Start Power

S702 — Compute $V_{min}$, $I_{min}$

S703 — Discharge capacitor

S704 — Measure V

S705 — V<$V_{min}$ ?

S706 — Charge capacitor

S707 — Measure V

S708 — Enough samples ?

S709 — Estimate I

S710 — I<$I_{min}$ ?

# Fig. 7

Fig. 8a

Fig. 8b

Fig. 8c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6057665 A

- WO 2011100968 A

**Non-patent literature cited in the description**

- **KAZMI SYED.** An improve and very efficient MPPT controller for PV systems subject to rapidly varying atmospheric conditions. *Australian universities power engineering conference,* 1-6